Europäisches Patentamt

European Patent Office

Office européen des brevets

(19)

(11)  **EP 1 403 664 A1**

(12)  **EUROPEAN PATENT APPLICATION**
published in accordance with Art. 158(3) EPC

(43) Date of publication:
     **31.03.2004 Bulletin 2004/14**

(51) Int Cl.⁷: **G02B 1/10**, B32B 7/02,
     B32B 9/00, B05D 7/04

(21) Application number: **02745826.4**

(22) Date of filing: **04.07.2002**

(86) International application number:
     **PCT/JP2002/006791**

(87) International publication number:
     **WO 2003/005069 (16.01.2003 Gazette 2003/03)**

(84) Designated Contracting States:
     **AT BE BG CH CY CZ DE DK EE ES FI FR GB GR
     IE IT LI LU MC NL PT**

(30) Priority: **05.07.2001 JP 2001204472**

(71) Applicant: **Teijin Dupont Films Japan Limited
     Tokyo 100-0011 (JP)**

(72) Inventor: **OGURI, Isamu;**
     **c/o Sagamihara Research Center
     Sagamihara-shi, Kanagawa 229-1105 (JP)**

(74) Representative: **Cockerton, Bruce Roger et al
     Carpmaels & Ransford,
     43-45 Bloomsbury Square
     London WC1A 2RA (GB)**

(54)  **ANTIREFLECTION FILM AND METHOD FOR PRODUCTION THEREOF**

(57)    An antireflective film comprising a transparent film substrate and an antireflective layer present on at least one surface of the substrate. The antireflective layer consists of three layers, i. e. , a first layer which is closest to the substrate layer, a second layer, and a third layer which is farthest from the substrate layer; the first layer comprises an oxide of at least one metal selected from the group consisting of titanium and zirconium; the second layer comprises an oxide of at least one metal selected from the group consisting of titanium and zirconium; the third layer comprises an oxide of silicon; it can be confirmed through observation by use of an electron microscope that the first, second, and third layers are different layers; and the antireflective layer has a reflectivity of not higher than 3% for light entered from the antireflective layer side and having a wavelength of 550 nm.

The antireflective film is excellent in adhesion in between the layers constituting the antireflective layer and durability.

EP 1 403 664 A1

**Description**

Technical Field

The present invention relates to an antireflective film and a production method thereof. More specifically, the present invention relates to a high-performance antireflective film which has high adhesion in between layers constituting an antireflective layer and has excellent durability, and a production method thereof.

Background Art

When one tries to see an exhibit or scenery through a transparent substrate such as a showcase, window or display, outside light reflects on the substrate or one's reflection appears on the substrate, making the exhibit or scenery hard to see. To prevent such reflections, an antireflective film to prevent the reflections from occurring is applied on the transparent substrate. As the antireflective film, an antireflective film formed by laminating, on a transparent plastic film, an antireflective layer comprising a laminate of at least two layers which are a low refractive index layer and a high refractive index layer made of a metal oxide or the like or a single low refractive index layer made of an inorganic compound or a fluoroorganic compound has conventionally been used.

Of these antireflective films, an antireflective film which exploits interference of light, has excellent antireflection properties and has an antireflective layer comprising a laminate of a low refractive index layer and a high refractive index layer is often used. As the high refractive index layer, a layer made of titanium oxide, zirconium oxide, tin oxide, indium-tin oxide, zinc oxide, cerium oxide, niobium oxide, yttrium oxide or tantalum oxide each having a high refractive index or a mixture of two or more of these oxides is used. Meanwhile, as the low refractive index layer, a fluorine-based compound or silicon oxide is mainly used. As methods of forming these antireflective layers, a method of forming the antireflective layer by a vapor phase method such as vacuum evaporation, sputtering or plasma CVD and a method of forming the antireflective layer by a coating method such as spray coating, immersion coating, screen printing or coating are known.

However, as demand for higher antireflectivity has been increasing in recent years, an antireflective layer consisting of one or two layers is increasingly liable to fail to meet the demand. Meanwhile, when an antireflective layer consisting of three or more layers is formed by wet coating, repetition of coating increases non-uniformity in film thickness and makes unevenness in coating conspicuous, and a desired refractive index cannot be obtained easily for a high refractive index layer in particular. Accordingly, a vacuum process such as vacuum evaporation or sputtering has often been used to form the antireflective layer consisting of three or more layers.

However, the vacuum process has a problem that it is very disadvantageous in terms of costs. Under the circumstances, a method of forming an antireflective layer by a combination of wet coating and a vapor phase method is proposed in JP-A 10-728. However, adhesion between a layer formed by the wet coating and a layer formed by the vapor phase method has not been sufficient, so that the formed antireflective layer has lacked durability in some cases.

Disclosure of the Invention

An object of the present invention is to provide a high-performance antireflective film which has excellent adhesion in between layers constituting a multilayer antireflective layer and has excellent durability.

Another object of the present invention is to provide a method for producing an antireflective film comprising a multilayer antireflective layer.

Other objects and advantages of the present invention will be apparent from the following description.

According to the present invention, firstly, the above objects and advantages of the present invention are achieved by an antireflective film which comprises a transparent film substrate and an antireflective layer present on at least one surface of the substrate, wherein

the antireflective layer consists of three layers, i.e., a first layer which is closest to the transparent film substrate layer, a second layer, and a third layer which is farthest from the substrate layer;
the first layer comprises an oxide of at least one metal selected from the group consisting of titanium and zirconium;
the second layer comprises an oxide of at least one metal selected from the group consisting of titanium and zirconium;
the third layer comprises an oxide of silicon;
it being confirmed through observation by use of an electron microscope that the first, second, and third layers are different layers; and
the antireflective film has a reflectivity of not higher than 3% for light having a wavelength of 550 nm and entered from the antireflective layer side.

Further, according to the present invention, secondly, the above objects and advantages of the present invention are achieved by a method for producing an antireflective film, the method comprising the steps of:

(1) forming a coating film comprising at least one metal alkoxide selected from the group consisting of a titanium alkoxide and a zirconium alkoxide on at least one surface of a transparent film substrate and hydrolyzing and condensing the alkoxide so as to form a first layer comprising an oxide of at least one metal selected from the group consisting of titanium and zirconium,
(2) forming a second layer which is a silicon oxide layer on the first layer by a vapor phase method, and
(3) forming a coating film comprising a silicon alkoxide on the second layer and hydrolyzing and condensing the alkoxide so as to form a third layer comprising a silicon oxide.

Best Mode for Carrying out the Invention

Hereinafter, the constitution of the present invention will be described in more detail.

<Transparent Film Substrate>

In the present invention, a transparent film substrate is preferably an organic polymer film with excellent industrial productivity. Illustrative examples of the organic polymer include polyesters such as polyethylene terephthalate (may be abbreviated as "PET" hereinafter) and polyethylene naphthalene dicarboxylate, a poly(meth)acryl such as polymethyl methacrylate (may be abbreviated as "PMMA" hereinafter), a polycarbonate (may be abbreviated as "PC" hereinafter), a polystyrene, a polyvinyl alcohol, a polyvinyl chloride, a polyvinylidene chloride, a polyethylene, an ethylene-vinyl acetate copolymer, a polyurethane, a triacetyl cellulose (may be abbreviated as "TAC" hereinafter), and a cellophane. Of these organic polymers, PET, PC, PMMA and TAC are preferably used in terms of transparency and strength.
The foregoing transparent film substrate may be an unstretched film or a stretched film depending on the type of the polymer. For example, a PET film is preferably used in the form of a biaxially stretched film, and a PC film, a TAC film and a cellophane film are preferably used in the form of an unstretched film.
The thickness of the transparent film substrate in the present invention is determined as appropriate according to applications of the antireflective film. For example, one having a thickness of 5 to 1,000 μm is suitably used.
Further, a lubricant may be contained in the transparent film substrate so as to improve handling properties such as slipperiness at the time of winding the film. Illustrative examples of the lubricant include inorganic fine particles such as silica, alumina, kaolin, calcium carbonate, titanium oxide and barium oxide, and organic fine particles such as a crosslinked acrylic resin, a crosslinked polystyrene resin, a melamine resin and a crosslinked silicone resin. The average particle diameter and amount to be added of the lubricant are not particularly limited as far as the transparency of the transparent film substrate is maintained. For example, the average particle diameter may be 20 to 5,000 nm, and the amount to be added may be 0.1 to 0.5% by weight based on the weight of the transparent film substrate.
In addition to the lubricant, the transparent film substrate in the present invention may also contain additives such as a stabilizer, an ultraviolet absorber, a flame retardant and an antistatic agent as required.
In the present invention, between the transparent film substrate and an antireflective layer, layer(s) to improve adhesion may be further formed. Specific examples of such layers include a polyester resin, an acrylic resin, and an urethane resin.

<Antireflective Layer>

An antireflective layer constituting the antireflective film in the present invention is formed on at least one surface of the transparent film substrate. To form the antireflective layer, a first layer, a second layer and a third layer are formed on the substrate in the order presented.

<First Layer>

In the present invention, the first layer is situated in the closest position to the transparent film substrate, among the layers constituting the antireflective layer.
The first layer preferably comprises an oxide of at least one metal selected from the group consisting of titanium and zirconium.
Such a first layer can be formed by diluting an alkoxide of titanium or zirconium with a solvent, applying the solution, and hydrolyzing the alkoxide during a drying step.
Specific examples of the alkoxide of titanium or zirconium include titanium tetraethoxide, titanium tetra-n-propoxide, titanium tetra-i-propoxide, titanium tetra-n-butoxide, titanium tetra-sec-butoxide, titanium tetra-tert-butoxide, zirconium tetraethoxide, zirconium tetra-n-propoxide, zirconium tetra-i-propoxide, zirconium tetra-n-butoxide, zirconium tetra-sec-butoxide, zirconium tetra-tert-butoxide, and their dimers, trimers, tetramers, pentamers and hexamers, and chelate compounds such as diethoxy titanium bisacetyl acetonate, dipropoxy titanium bisacetyl acetonate, dibutoxy titanium bisacetyl acetonate, diethoxy zirconium bisacetyl acetonate, dipropoxy zirconium bisacetyl acetonate, and dibutoxy zirconium bisacetyl acetonate.

Illustrative examples of the solvent for dissolving the alkoxide include saturated hydrocarbons, alcohols, ketones and esters such as hexane, heptane, octane, ligroin, methyl ethyl ketone, isopropyl alcohol, methanol, ethanol, butanol, methyl isobutyl ketone, ethyl acetate and butyl acetate, halogenated hydrocarbons, aromatic hydrocarbons such as toluene and xylene, and mixtures thereof. As a coating method, a method used in a general coating process can be used. Illustrative examples of the coating method include spin coating, dip coating, spray coating, roller coating, meniscus coating, flexographic printing, screen printing, beat coating and microgravure coating.

As for conditions for drying after the coating, heat treatment is carried out at temperatures not higher than the heat distortion temperature of the foregoing transparent film substrate. For example, when the transparent film substrate is a polyethylene terephthalate film, drying is preferably carried out at 80 to 150°C for 30 seconds to 10 minutes. Depending on the condition of the dried coating film, the film is preferably aged at 40 to 90°C for about 12 hours to 1 week so as to stabilize the refractive index of the film.

Further, when an organosilicon compound represented by, for example, the following formula (III):

$$R^1_a R^2_b SiX_{4-(a+b)} \tag{III}$$

wherein $R^1$ and $R^2$ are each independently a hydrocarbon group having an alkyl group, an alkenyl group, an allyl group, a halogen atom, an epoxy group, an amino group, a mercapto group, a methacryl group, a fluoro atom or a cyano group, X is an alkoxyl group, an alkoxyalkoxyl group, a halogen atom or an acyloxy group, and a and b are each independently 0, 1 or 2, provided that a+b is 2 or less,
is added to the first layer, the refractive index of the metal oxide film formed by hydrolysis of the alkoxide of titanium or zirconium can be adjusted. Due to lower reactivity of the organosilicon compound than that of the alkoxide of titanium or zirconium, the organosilicon compound has an effect of extending a pot life. The proportion of the organosilicon compound is preferably 0.1 to 30% based on the weight of the hydrolyzed alkoxide.

Specific examples of the organosilicon compound include tetraalkoxysilanes such as tetramethoxysilane, tetraethoxysilane, tetra-n-propoxysilane, tetra-i-propoxysilane, tetra-n-butoxysilane, tetra-sec-butoxysilane and tetra-t-butoxysilane; trialkoxysilanes, triacyloxysilanes and triphenoxysilanes such as methyltrimethoxysilane, methyltriethoxysilane, methyltrimethoxyethoxysilane, methyltriacetoxysilane, methyltripropoxysilane, methyltributoxysilane, ethyltrimethoxysilane, ethyltriethoxysilane, vinyltrimethoxysilane, vinyltriethoxysilane, vinyltriacetoxysilane, vinyltrimethoxyethoxysilane, phenyltrimethoxysilane, phenyltriethoxysilane, phenyltriacetoxysilane, decyltrimethoxysilane, decyltriethoxysilane, trifluoropropyltrimethoxysilane, trifluoropropyltriethoxysilane, heptadecatrifluorodecyltrimethoxysilane, heptadecatrifluorodecyltriethoxysilane, γ-chloropropyltrimethoxysilane, γ-chloropropyltriethoxysilane, γ-chloropropyltriacetoxysilane, γ-methacryloxypropyltrimethoxysilane, γ-aminopropyltrimethoxysilane, γ-aminopropyltriethoxysilane, γ-mercaptopropyltrimethoxysilane, γ-mercaptopropyltriethoxysilane, N-β-(aminoethyl)-γ-aminopropyltrimethoxysilane, β-cyanoethyltriethoxysilane, methyltriphenoxysilane, chloromethyltrimethoxysilane, chloromethyltriethoxysilane, glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltrimethoxyethoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltrimethoxyethoxysilane, γ-(3,4-epoxycyclohexyl)propyltrimethoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, and δ-(3,4-epoxycyclohexyl)butyltrimethoxysilane; and dialkoxysilanes, diphenoxysilanes and diacyloxysilanes such as dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, γ-aminopropylmethyldimethoxysilane, γ-aminopropylmethyl-diethoxysilane, methylvinyldimethoxysilane, methylvinyldiethoxysilane, glycidoxymethylmethyldimethoxysilane, glyci-doxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropyl-methyldipropoxysilane, γ-glycidoxypropylmethyldibutoxyethoxysilane, γ-glycidoxypropylmethyldimethoxyethoxysi-lane, γ-glycidoxypropylmethyldiphenoxysilane, γ-glycidoxypropylmethyldiacetoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, γ-glycidoxypropylphenyldimethoxysilane, and γ-glycidoxypropylphenyldiethoxysilane. Of these, alkoxysilanes are preferred.

Although these silicon compounds are used to adjust desired optical properties such as the refractive index of the film, two or more of these silicon compounds can be used for the sake of hardness, wettability and adhesion of the surface and prevention of occurrence of cracks on the surface.

Further, the first layer contains particles having an average particle diameter of 1 to 500 nm in an amount of preferably 0.1 to 25 wt%, more preferably 0.3 to 10 wt%, particularly preferably 0.5 to 7 wt%.

When such particles are contained, fine pits and projections are formed on the surface of the first layer. Thereby, an antireflective film whose blocking is inhibited and which can be rolled up neatly can be obtained.

The average particle diameter of the particles to be dispersed is more preferably 20 to 200 nm. As for particle diameters of the particles, only one peak or two or more peaks may exist in granular variation thereof. Further, these particles are preferably added in a state of being dispersed in a solvent. However, they may not be added in a state of being dispersed in a solvent as long as they are fully dispersed after added.

Further, as described above, the amount to be added of the particles is more preferably 0.3 to 10% based on the weight of the hydrolyzed alkoxide. When the amount is too large, haze is liable to increase disadvantageously, while when the amount is too small, slipperiness lowers, so that blocking is liable to occur disadvantageously.

As for the type of the particles, at least one selected from the group consisting of metal element such as titanium, silicon, tin, iron, aluminum, copper, magnesium, indium, antimony, manganese, cerium, yttrium, zinc and zirconium, oxides thereof, and 1 or nitrides thereof is preferably used. Illustrative examples of such particles include titanium oxide, silicon oxide, tin oxide, iron oxide, aluminium oxide, copper oxide, magnesium oxide, indium-tin oxide, antimony-tin oxide, manganese oxide, cerium oxide, yttrium oxide, zinc oxide, and zirconium oxide. These particles are excellent in transparency, hardness and stability.

As a method for forming a titanium oxide film from the alkoxide of titanium or forming a zirconium oxide film from the alkoxide of zirconium, a method in which the alkoxide is diluted with a solvent, applied and dried as described above so as to obtain the oxide film and the alkoxide is hydrolyzed by being reacted with water in the air during the drying step is preferred.

The amount to be added of the alkoxide is preferably not lower than 0.1 wt%, more preferably 0.1 to 10 wt%, in terms of titanium oxide or zirconium oxide produced by hydrolyzing and condensing 100% of the alkoxide. When the content of the alkoxide is lower than 0.1 wt% in terms of the oxide, the oxide film to be formed cannot exhibit desired properties to a sufficient degree, while when the content of the alkoxide is higher than 10 wt%, formation of a film which is transparent and uniform becomes difficult. Further, in the present invention, within the above solid content range, a binder such as a polyester resin or an acrylic resin can also be used.

Further, in the present invention, the alkoxide may be hydrolyzed after diluted with a solvent. As for conditions for the hydrolysis, the alkoxide is stirred at 15 to 35° C, more preferably 22 to 28° C, for 0.5 to 48 hours, more preferably 2 to 35 hours. Further, it is preferable to use a catalyst in the hydrolysis. As the catalyst, acid such as hydrochloric acid, nitric acid, sulfuric acid or acetic acid is preferred. The acid is added as an aqueous solution of about 0.0001 to 12N, preferably about 0.0005 to 5N so as to be suitable for the hydrolysis. The aqueous solution of the acid is preferably added so that the pH of the whole solution is 4 to 10.

<Second Layer>

In the present invention, the second layer is situated between the first layer and the third layer in the antireflective layer.

The second layer in the present invention preferably comprises an oxide of at least one metal selected from the group consisting of titanium and zirconium. The oxide film is preferably formed by a vapor phase method. By use of the vapor phase method, a high refractive index film which cannot be obtained by a wet method can be formed. Further, the high refractive index film has good adhesion to the foregoing first layer advantageously. The vapor phase method is more preferably sputtering.

As for a combination of the first layer and the second layer, a combination of an oxide film formed from an alkoxide and an oxide film formed by the vapor phase method is preferred in view of adhesion between the layers. In particular, when both of the layers are a film composed essentially of titanium or zirconium, high affinity can be attained advantageously.

<Third Layer>

In the present invention, the third layer constitutes a layer which is farthest from the substrate among the layers constituting the antireflective layer and preferably comprises a silicon oxide film formed from an alkoxide of silicon.

Illustrative examples of the alkoxide of silicon include tetraethoxysilane, tetramethoxysilane, tetraisopropoxysilane, tetrabutoxysilane, and multimers thereof. Further, the organosilicon compound represented by the above formula (III) may be added and used as appropriate according to the desired hardness, flexibility and surface properties of the film.

These alkoxides of silicon may be used alone or in combination of two or more. Of these, tetraethoxysilane is particularly preferred.

In the present invention, to impart an electrification preventing function, fine particles of a metal oxide may be added to the alkoxide of silicon. The metal oxide is not particularly limited as long as it is a metal oxide having conductivity. Illustrative examples of the metal oxide include ITO (indium oxide-tin oxide), tin oxide, zinc oxide, and ATO (antimony oxide-tin oxide). Further, to prevent blocking of the antireflective film, organic fine particles and/or inorganic fine particles intended for making fine pits and projections on the surface may be added, and such an organosilicon compound as described above may also be added to adjust a refractive index.

As a method for forming the silicon oxide film from the alkoxide of silicon, a method in which sol obtained by hydrolysis of the above alkoxide is applied, dried and cured may be used.

The hydrolysis of the silicon alkoxide is carried out by dissolving the above silicon compound into an appropriate solvent and then adding water to a solution comprising the silicon alkoxide and the solvent at least in a minimum amount required to hydrolyze the silicon alkoxide. Illustrative examples of the solvent include alcohols, ketones and esters such as methyl ethyl ketone, isopropyl alcohol, methanol, ethanol, methyl isobutyl ketone, ethyl acetate and butyl acetate, halogenated hydrocarbons, aromatic hydrocarbons such as toluene and xylene, and mixtures thereof.

The amount to be added of the silicon alkoxide is preferably not lower than 0.1 wt%, more preferably 0.1 to 10 wt%, in terms of silicon oxide produced by hydrolyzing and condensing 100% of the silicon compound. When the content of the silicon alkoxide is lower than 0.1 wt% in terms of silicon oxide sol, the silicon oxide film to be formed cannot fully exhibit desired properties, while when the content of the silicon alkoxide is higher than 10 wt%, formation of a film which is transparent and uniform becomes difficult.

Further, in the present invention, within the above solid content range, a binder such as a polyester resin or acrylic resin can also be used.

The amount to be added of the organosilicon compound represented by the formula (III) is preferably 10 to 30 wt%. When the amount of the organosilicon compound is smaller than 10 wt%, the film strength of the antireflective layer is low, while when the amount is larger than 30 wt%, layer formability of the third layer lowers.

In the hydrolysis of the silicon alkoxide in the present invention, the silicon alkoxide is stirred at 15 to 35°C, more preferably 22 to 28°C, for 0.5 to 48 hours, more preferably 2 to 35 hours. Further, it is preferable to use a catalyst in the hydrolysis. As the catalyst, acid such as hydrochloric acid, nitric acid, sulfuric acid or acetic acid is preferred. The acid is added as an aqueous solution of about 0.0001N to 12N, preferably about 0.0005N to 5N so as to be suitable for the hydrolysis. The aqueous solution of the acid is preferably added so that the pH of the whole solution is 4 to 10. In addition to the acid, a base such as ammonia may be used as the catalyst.

As described above, the antireflective layer in the present invention comprises the first layer, the second layer, and the third layer which are independent, different layers. This fact can be confirmed by observing a cross section of the antireflective layer under an electron microscope.

When light having a wavelength of 550 nm enters the antireflective film of the present invention from the opposite side of the substrate, i.e., the antireflective layer side, the antireflective layer shows a reflectivity of not higher than 3%, preferably not higher than 1.5%.

The antireflective film of the present invention preferably shows a luminous reflectivity of not higher than 1% for light having a wavelength of 380 to 780 nm and entered from the antireflective layer side.

In the present invention, the antireflective layer, as described above, comprises the first layer which is closest to the substrate, the second layer, and the third layer which is farthest from the substrate. It is preferable that the first layer be a medium refractive index layer, the second layer be a high refractive index layer, and the third layer be a low refractive index layer.

The designations "medium refractive index layer", "high refractive index layer" and "low refractive index layer" are based on relative order of refractive indices of the layers. That is, when the refractive index of the medium refractive index layer (first layer) is expressed as nM, the refractive index of the high refractive index layer (second layer) as hH, and the refractive index of the low refractive index layer (third layer) as nL, the relative relationship among the refractive indices of the layers is expressed as nL < nM < nH.

The antireflective layer in the present invention is an antireflective layer which exploits interference of light, and the layers each preferably satisfy the following expression (I).

$$n \cdot d = \lambda/4 \text{ or } n \cdot d = \lambda/2 \qquad (I)$$

(wherein n represents the refractive index of each layer, d represents the thickness (nm) of each layer, and $\lambda$ represents the wavelength (nm) of light.)

However, for fine adjustments of the shape of a reflection spectrum to be obtained, an actual value may be intentionally displaced from the relational expression (I). Further, the light wavelength $\lambda$ is generally based on 500 to 600 nm which shows high visual sensitivity.

Further, the refractive index of each layer must satisfy the relationship of the following expression (II).

$$nL \times nM = \sqrt{(n0 \cdot ns)} \times nH \qquad (II)$$

(wherein n0 represents the refractive index of an air layer, and ns represents the refractive index of a layer adjacent to the medium refractive index layer and present on the opposite side of the high refractive index layer. Generally, ns represents the refractive index of the transparent film substrate or the refractive index of a hard coat layer when the hard coat layer is further formed.)

However, in this case as well, for fine adjustments of the shape of a spectrum, a slight adjustment may be made. When an organic polymer film is used as the transparent film substrate, its refractive index ns is generally 1.45 to 1.80. Further, when the hard coat layer is further formed, the refractive index ns is expressed as the refractive index of the hard coat layer and is generally 1.45 to 1.60.

As for the refractive indices of the layers constituting the antireflective layer, nM is preferably 1.60 to 2.20, nH is preferably 1.80 to 2.80, and nL is preferably 1.30 to 1.55, with the proviso that nH > nM holds. These refractive indices are imparted primarily by the refractive indices inherent in the oxides constituting the layers. They are also dependent on the surfacial conditions of the layers.

The thickness of each of the layers constituting the antireflective layer in the present invention is derived from the expression (I) and is generally 10 to 300 nm.

<Hard Coat Layer>

To impart desired hardness to the antireflective film in the present invention, a hard coat layer may be further formed. The hard coat layer in the present invention is preferably formed between the transparent film substrate and the antireflective layer. The hard coat layer is preferably a transparent layer having moderate hardness. The "moderate hardness" refers to hardness corresponding to at least "H" in a pencil hardness test described in JISK5400.

A raw material constituting the hard coat layer is not particularly limited. For example, an ionizing radiation curable resin, an ultraviolet curable resin, and a thermosetting resin can be used as the raw material. Particularly, an ultraviolet curable acrylic resin, an ultraviolet organosilicon resin, and a thermosetting polysiloxane resin are suitably used. As these resins, known resins can be used.

In the hard coat layer in the present invention, transparent inorganic or organic fine particles having an average particle diameter of 0.01 to 3 $\mu$m may be mixed and dispersed in such an amount that does not impair properties. Thereby, light diffusion called "antiglare" can be treated. Then, when the antireflective layer is formed on the hard coat layer subjected to the light diffusion treatment, blurring of an image becomes small, and an image appears sharper than when the antireflective layer is not formed on the hard coat layer subjected to the anti-glare treatment. These fine particles are not particularly limited as long as they are transparent.

The thickness of the thus obtained hard coat layer is preferably 1 to 10 $\mu$m, more preferably 3 to 8 $\mu$m. When the thickness of the hard coat layer is smaller than 1 $\mu$m, sufficient hardness cannot be imparted, while when it is larger than 10 $\mu$m, sufficient hardness cannot be obtained by heating or a radiation, so that blocking is liable to occur.

<Soil Resistant Layer>

In the antireflective film in the present invention, a soil-resistant layer may further be formed for the purpose of protecting the surface of the antireflective layer and increasing soil resistance. The soil-resistant layer in the present invention is preferably formed on the surface of the third layer in the antireflective layer.

As a material constituting the soil-resistant layer, any material can be used without limitations as long as it has transparency and achieves required soil resistance. For example, a compound having a hydrophobic group, more specifically, fluorocarbon, perfluorosilane, and their polymer compounds are used. Further, to improve fingerprint removability, a polymer compound having lipophobicity such as a methyl group is suitably used.

The thickness of the soil-resistant layer must be set so as not to impair the function of the antireflective layer. When the thickness is too large, the function of the antireflective layer is adversely affected, while when the thickness is too small, soil resistance is not exhibited easily. Thus, the thickness of the soil-resistant layer is preferably about 1 to 50 nm.

<Production Method>

The antireflective film in the present invention, in a preferred embodiment, is produced by forming the transparent film substrate first and then forming, on one surface of the transparent film substrate, the hard coat layer, the first, second and third layers which constitute the antireflective layer, and the soil-resistant layer in the order presented.

Firstly, the transparent film substrate is unstretched or biaxially stretched according to the type of a polymer. On one surface of the obtained transparent film substrate having a thickness of 5 to 1,000 μm, firstly, the hard coat layer is formed. As a method for applying the hard coat layer, a known method can be used. According to material used for the hard coat layer, a curing method such as ultraviolet or heat is selected as appropriate so as to cure the material for the hard coat layer. Thereby, the hard coat layer having a thickness of 1 to 10 μm is obtained.

Then, to form the first layer constituting the antireflective layer, an alkoxide of titanium or zirconium is diluted with a solvent and applied on the hard coat layer. As a method for applying the solution, a method used in a general coating process, such as spin coating, dip coating, spray coating, roller coating, meniscus coating, flexographic printing, screen printing, beat coating and microgravure coating, can be used. In the coating layer, the alkoxide is hydrolyzed by moisture in an atmosphere or moisture contained in the solvent and condensed to form a polymer.

The coating layer is dried by heat treatment at temperatures not higher than the heat distortion temperature of the transparent film substrate. The heat treatment is preferably carried out in a sufficient oxygen atmosphere so as to promote production of titanium oxide. When the transparent film substrate is a polyethylene terephthalate film, the heat treatment is preferably carried out at about 80 to 150°C for about 30 seconds to 5 minutes, thereby obtaining a medium refractive index layer comprising a titanium oxide film or zirconium oxide film having a thickness of 10 to 300 nm and a refractive index of 1.60 to 2.20.

Thereafter, on the first layer, by sputtering which is a type of vapor phase method, the second layer comprising a titanium oxide film, zirconium oxide film or silicon oxide film having, for example, a thickness of 10 to 300 nm and a refractive index of 1.80 to 2.80 is formed.

On the second layer, the first layer is further formed. A method for forming the first layer comprises the steps of dissolving an alkoxide of silicon in a solvent, adding water and a catalyst so as to hydrolyze the alkoxide, applying the obtained silicon oxide sol on the already formed second layer, and then drying and curing the applied sol so as to eventually obtain the first layer comprising a silicon oxide film.

In the hydrolysis of the silicon alkoxide, it is stirred preferably at 15 to 35°C, more preferably 22 to 28°C, for preferably 0.5 to 48 hours, more preferably 2 to 35 hours.

As a method for applying the sol, a method used in a general coating process, such as spin coating, dip coating, spray coating, roller coating, meniscus coating, flexographic printing, screen printing, beat coating and microgravure coating, can be used.

Further, the applied sol is dried by heat treatment at temperatures not higher than the heat distortion temperature of the transparent film substrate. For example, when the transparent film substrate is a polyethylene terephthalate film, the heat treatment is carried out at about 80 to 150°C for about 30 seconds to 5 minutes so as to form a silicon oxide gel film. Such heat treatment conditions vary depending on the type and thickness of the transparent film substrate to be used and are selected as appropriate according to the type of the transparent film substrate to be used. Thus, the third layer comprising a silicon oxide film having, for example, a thickness of 10 to 300 nm and a refractive index of 1.30 to 1.55 is obtained.

Further, in the present invention, the soil-resistant layer may be formed on the third layer. As a method of forming the soil-resistant layer, a variety of coating methods including vacuum film formation processes such as vacuum evaporation, sputtering, ion plating, plasma CVD and plasma polymerization and wet processes such as microgravure coating, screen printing and dip coating can be selected as appropriate according to materials. By use of such a method, a soil-resistant layer having a thickness of 1 to 50 nm is formed, and eventually an antireflective film suitable for the present invention is obtained.

The thus obtained antireflective film can be used in the same manner as a conventional antireflective film is used. For example, when it is laminated on a glass plate, plastic plate or polarizing plate by use of a sticker or adhesive, an optical member having antireflectivity can be obtained.

Examples

Hereinafter, the present invention will be further described with reference to Examples. Film properties were evaluated in accordance with the following methods.

1. Refractive Index

(1) Refractive Index of ns (Transparent Film Substrate or Hard Coat Layer)

When the hard coat layer is not formed in the antireflective film, the refractive index of the transparent film substrate was measured as ns since the first layer made contact with the transparent film substrate. Meanwhile, when the hard coat layer is formed in the antireflective film, the refractive index of the hard coat layer was measured as ns since the first layer made contact with the hard coat layer so as to form an interface. The measurement was made by use of an Abbe refractometer.

(2) Refractive Index of Each Antireflective Layer

One of the layers constituting the antireflective layer was formed on one surface of the transparent film substrate or on one surface of the hard coat layer formed on one surface of the transparent film substrate, the other surface (of the transparent film substrate where the antireflective layer was not formed) was coated black, reflectivity R was measured with no reflection on the backside, and a refractive index was calculated from the reflectivity by use of the following expression. As the reflectivity, diffuse reflectivity with respect to light having a wavelength of 550 nm and entered at an incidence angle of 8° was measured by use of an ultraviolet-visible spectrophotometer (UV-3101PC, product of Shimadzu Corporation).

$$R = [(ns - n2)/(ns + n2)]2 \qquad\qquad (IV)$$

(ns: refractive index of transparent film substrate or refractive index of hard coat layer, n: refractive index of each antireflective layer)

2. Reflectivity of Antireflective Film

The antireflective film comprising the transparent film substrate, the hard coat layer, the antireflective layer and the soil-resistant layer was irradiated with light having a wavelength of 550 nm, and reflectivity was measured by use of an ultraviolet-visible spectrophotometer (UV-3101PC, product of Shimadzu Corporation).

3. Luminous Reflectivity of Antireflective Layer

In accordance with JIS Z8701, tristimulus values (XYZ) with respect to standard light C were determined from the reflection spectrum within a range of 380 to 780 nm of the antireflective layer, and the Y value was taken as luminous reflectivity.

4. Adhesion

Prior to formation of the soil-resistant layer, 6 incisions were made in the antireflective film in each of longitudinal and transverse directions at an interval of 2 mm from the antireflective layer side by use of a cutter knife so as to make 25 grids. After a NICHIBAN cellophane tape was stuck on the grids, the cellophane tape was peeled at a peel angle of 90°. The number of antireflective layer grids remaining on the antireflective film was counted visually and evaluated based on the following criteria.

○: All 25 grids remained (no peeling).
Δ: 20 to 24 grids remained.
×: 19 grids or less remained.

5. Thickness of Each Antireflective Layer

The refractive index of each antireflective layer was measured by use of the method described in 1.(2), and the thickness of each antireflective layer was calculated by use of the following formula (I).

$$n \cdot d = \lambda/4 \text{ or } n \cdot d = \lambda/2 \tag{I}$$

(wherein n represents the refractive index of each layer, d represents the thickness (nm) of each layer, and $\lambda$ represents the wavelength (nm) of light.)

Example 1

A biaxially oriented PET film (product of TEIJIN LTD., trade name: "OPFW", thickness: 188 $\mu$m) which had been rendered easily adhesive was used as a transparent film substrate. On one surface of the film, an ultraviolet curable hard coating agent (product of JSR Corporation, trade name: "DESOLITE Z7500") was applied and then ultraviolet-cured so as to form a hard coat layer (refractive index: 1.52) having a thickness of 5 $\mu$m. Then, in a 4-wt% (in terms of titanium oxide) solution prepared by dissolving a tetramer of tetrabutyl titanate (product of NIPPON SODA CO., LTD., trade name: "TBT B-4") in ligroin/n-butanol (3/1) as a solvent, silicon oxide particles (product of C.I.KASEI CO., LTD., trade name: "$SiO_2$ SLURRY", average particle diameter: 25 nm) were added and dispersed in an amount of 0.5 wt% based on the titanium alkoxide, and the resulting solution was applied on the hard coat layer by microgravure coating and then heat-treated at 150°C for 2 minutes so as to form a first layer (medium refractive index layer) film (refractive index: 1.92) having a thickness of about 72 nm. Further, on the first layer, a second layer (high refractive index layer) comprising a titanium oxide film (refractive index: 2.32) having a thickness of 60 nm was formed by sputtering. Finally, a solution containing 5 wt% (in terms of silicon oxide) of silicon oxide sol obtained by dissolving tetraethoxysilane in ethanol and then adding water and hydrochloric acid thereto was applied by microgravure coating and then heat-treated at 100° C for 2 minutes so as to form a third layer (low refractive index layer) comprising a silicon oxide gel film (refractive index: 1.45) having a thickness of 95 nm. In addition, as a soil-resistant layer, a methanol solution of a fluorine-based silane coupling agent (product of Shin-Etsu Chemical Co., Ltd., trade name: "KBM-7803") was applied such that the soil-resistant layer would have a thickness of 5 nm when dried and cured. Thus, an antireflective film was obtained. The adhesion of the antireflective layer of the thus obtained antireflective film and the reflectivity of the antireflective film are shown in Table 1.

Comparative Example 1

The procedure of Example 1 was repeated except that as the high refractive index layer which was the second layer, an ITO (indium oxide-tin oxide) film having a thickness of 68 nm (refractive index: 1.95) was formed by sputtering. The adhesion of the antireflective layer of the obtained antireflective film and the reflectivity of the antireflective film are shown in Table 1.

Comparative Example 2

The procedure of Example 1 was repeated except that as the medium refractive index layer which was the first layer, a first layer with a thickness of 82 nm (refractive index: 1.68) which was formed by applying a 5-wt% solution prepared by dispersing fine particles of zirconium oxide (product of JSR CORPORATION, "JN7102") together with an acrylic resin binder in a methyl isobutyl ketone solvent by microgravure coating and then curing the applied solution was used. The adhesion of the antireflective layer of the obtained antireflective film and the reflectivity of the antireflective film are shown in Table 1.

Example 2

The procedure of Example 1 was repeated except that the high refractive index layer which was the second layer was changed to $ZrO_2$ (zirconium oxide, refractive index: 2.1, thickness: 65 nm) formed by sputtering. The adhesion of the antireflective layer of the obtained antireflective film and the reflectivity of the antireflective film are shown in

Table 1.

Table 1

|  | Ex.1 | Ex.2 | C.Ex.1 | C.Ex.2 |
|---|---|---|---|---|
| Adhesion | ○ | ○ | × | △ |
| Reflectivity | 0.5% | 0.5% | 0.5% | 1.0% |
| Luminous Reflectivity (Y Value) | 0.27 | 0.59 | 1.8 | 3.0 |

Ex.: Example, C.Ex.: Comparative Example

As shown in Table 1, the antireflective films of Examples 1 and 2 were excellent in the adhesion of the antireflective layer and antireflectivity. Meanwhile, the antireflective film of Comparative Example 1 had low adhesion between the high refractive index layer as the second layer and the medium refractive index layer as the first layer and had poor durability. Further, the antireflective film of Comparative Example 2 also had low adhesion between the high refractive index layer as the second layer and the medium refractive index layer as the first layer since the oxide component constituting the medium refractive index layer as the first layer was a compound other than a titanium alkoxide, and the antireflective film of Comparative Example 2 also had low antireflectivity.

**Claims**

1.    An antireflective film which comprises a transparent film substrate and an antireflective layer present on at least one surface of the substrate, wherein the antireflective layer consists of three layers, i.e., a first layer which is closest to the substrate layer, a second layer, and a third layer which is farthest from the substrate layer;

the first layer comprises an oxide of at least one metal selected from the group consisting of titanium and zirconium;
the second layer comprises an oxide of at least one metal selected from the group consisting of titanium and zirconium;
the third layer comprises an oxide of silicon;
it being confirmed through observation by use of an electron microscope that the first, second, and third layers are different layers; and
the antireflective film has a reflectivity of not higher than 3% for light having a wavelength of 550 nm and entered from the antireflective layer side.

2.    The film of claim 1, wherein the first layer further contains an oxide of silicon.

3.    The film of claim 1, wherein the first layer contains particles having an average particle diameter of 1 to 500 nm in an amount of 0.1 to 25 wt%.

4.    The film of claim 3, wherein the particles having an average particle diameter of 1 to 500 nm comprise at least one selected from the group consisting of titanium, silicon, tin, iron, aluminum, copper, magnesium, indium, antimony, manganese, cerium, yttrium, zinc and zirconium, oxides of these metallic elements, and nitrides of these metallic elements.

5.    The film of claim 1, wherein the first layer is derived from at least one metal alkoxide selected from the group consisting of a titanium alkoxide and a zirconium alkoxide.

6.    The film of claim 5, wherein the first layer further comprises a silicon oxide derived from a silicon alkoxide.

7.    The film of claim 1, wherein the second layer is formed by a vapor phase method.

8.    The film of claim 1, wherein the third layer is derived from a silicon alkoxide.

**9.** The film of claim 1, wherein the reflectivity is not higher than 1.5%.

**10.** The film of claim 1, which shows a luminous reflectivity of not higher than 1% for light having a wavelength of 380 to 780 nm and entered from the antireflective layer side.

**11.** The film of claim 1, wherein the first layer has a refractive index of 1.60 to 2.20, the second layer has a refractive index of 1.80 to 2.80, the third layer has a refractive index of 1.30 to 1.55, and the refractive index of the second layer is larger than that of the first layer.

**12.** The film of claim 1, which further comprises a hard coat layer between the transparent film substrate and the antireflective layer.

**13.** The film of claim 1, wherein a soil-resistant layer is further present on the third layer in the antireflective layer.

**14.** A method for producing an antireflective film, the method comprising the steps of:

(1) forming a coating film comprising at least one metal alkoxide selected from the group consisting of a titanium alkoxide and a zirconium alkoxide on at least one surface of a transparent film substrate and hydrolyzing and condensing the alkoxide so as to form a first layer comprising an oxide of at least one metal selected from the group consisting of titanium and zirconium,
(2) forming a second layer which is a layer of a titanium oxide or zirconium oxide on the first layer by a vapor phase method, and
(3) forming a coating film comprising a silicon alkoxide on the second layer and hydrolyzing and condensing the alkoxide so as to form a third layer comprising a silicon oxide.

**EP 1 403 664 A1**

## INTERNATIONAL SEARCH REPORT

International application No.

PCT/JP02/06791

| A. CLASSIFICATION OF SUBJECT MATTER |
|---|
| Int.Cl$^7$ G02B1/10, B32B7/02, B32B9/00, B05D7/04 |

According to International Patent Classification (IPC) or to both national classification and IPC

| B. FIELDS SEARCHED |
|---|
| Minimum documentation searched (classification system followed by classification symbols) |
| Int.Cl$^7$ G02B1/10, B32B7/02, B32B9/00, B05D7/04 |

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 9-227165 A (Central Glass Co., Ltd.),<br>02 September, 1997 (02.09.97),<br>Full text<br>(Family: none) | 1–13 |
| X<br>Y | JP 10-300902 A (Dainippon Printing Co., Ltd.),<br>13 November, 1998 (13.11.98),<br>Full text; all drawings<br>(Family: none) | 1,2,6–13<br>3–5 |
| Y | JP 2001-21701 A (Sumitomo Osaka Cement Co., Ltd.),<br>26 January, 2001 (26.01.01),<br>Full text; all drawings<br>(Family: none) | 1–6,8–13 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 October, 2002 (03.10.02) | 22 October, 2002 (22.10.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

13

**EP 1 403 664 A1**

## INTERNATIONAL SEARCH REPORT

| International application No. |
| --- |
| PCT/JP02/06791 |

**C (Continuation). DOCUMENTS CONSIDERED TO BE RELEVANT**

| Category* | Citation of document, with indication, where appropriate, of the relevant passages | Relevant to claim No. |
| --- | --- | --- |
| X | JP 7-174901 A (Teijin Ltd.), | 1,2,5,8-12 |
| Y | 14 July, 1995 (14.07.95), Full text (Family: none) | 3,4,6,13 |
| A | JP 8-278403 A (Teijin Ltd.), 22 October, 1996 (22.10.96), Full text (Family: none) | 1-14 |

Form PCT/ISA/210 (continuation of second sheet) (July 1998)

14